Europäisches Patentamt

European Patent Office

Office européen des brevets

(19)

(11) Numéro de publication: **0 336 802**
**A1**

(12)

# DEMANDE DE BREVET EUROPEEN

(21) Numéro de dépôt: **89400739.2**

(22) Date de dépôt: **16.03.89**

(51) Int. Cl.⁴: **A 45 C 5/14**
**B 60 B 37/10**

(30) Priorité: **05.04.88 FR 8804424**

(43) Date de publication de la demande:
**11.10.89 Bulletin 89/41**

(84) Etats contractants désignés: **BE DE GB IT**

(71) Demandeur: **DELSEY, Société Anonyme dite:**
**23, rue Saint-André**
**F-93012 Bobigny Cédex (FR)**

(72) Inventeur: **Seynhaeve, André G.**
**18, rue du Moulin Saint-Rieul**
**F-60300 Senlis (FR)**

(74) Mandataire: **Dawidowicz, Armand Conseil en Brevets**
**30 Boulevard du Château**
**F-92200 Neuilly sur Seine (FR)**

(54) **Roue en particulier pour bagages.**

(57) L'invention concerne une roue en particulier pour bagage tel que valise ou sac de voyage.

La roue selon l'invention est caractérisée par le fait qu'elle comprend une jante (1) moulée, sur un alésage (h) de laquelle est clipsée une entretoise (2) moulée dans un matériau élastiquement déformable et un axe métallique (3) serti à force dans un alésage de ladite entretoise (2).

Fig. 1

Bundesdruckerei Berlin

EP 0 336 802 A1

**Description**

## ROUE EN PARTICULIER POUR BAGAGES.

L'invention concerne une roue, en particulier pour bagage tel que valise ou sac de voyage.

L'utilisation de roues pour faciliter le déplacement des bagages a connu un grand développement. Les roues utilisées, compte-tenu de la compétitivité du marché des bagages, doivent être de prix de revient faible et de montage très simple, tout en étant solides, indémontables, non bruyantes, peu sensibles à l'usure et au coincement.

La présente invention vise à fournir une nouvelle roue en particulier pour bagage présentant simultanément toutes ces qualités, ce qui n'est pas le cas des roues pour bagages disponibles actuellement.

A cet effet, la roue selon l'invention est caractérisée par le fait qu'elle comprend une jante moulée, sur un alésage de laquelle est clipsée une entretoise moulée dans un matériau élastiquement déformable et un axe métallique serti à force dans un alésage de ladite entretoise.

De préférence, la jante est surmoulée par un bandage souple en un matériau de la même famille thermoplastique que celui de la jante.

L'invention sera bien comprise à la lecture de la description suivante faite en se référant au dessin dans lequel:

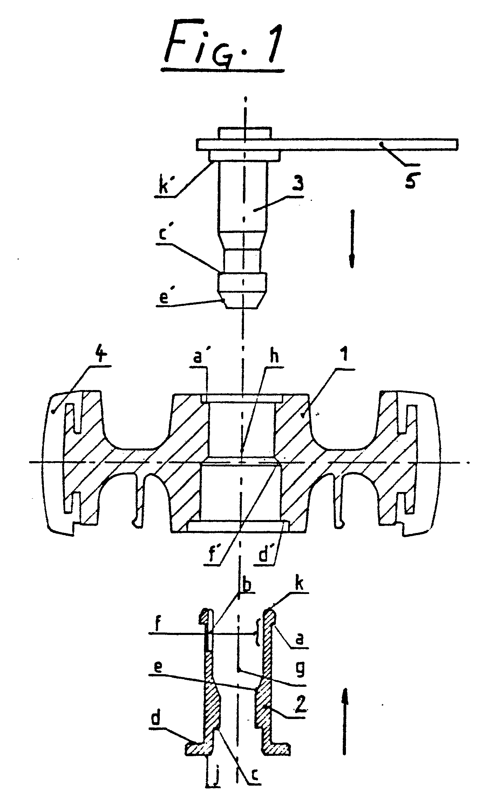

- la figure 1 est une vue schématique en coupe axiale partiellement en plan des éléments d'une roue selon un exemple de réalisation de l'invention, avant assemblage;

- la figure 2 est analogue à la figure 1, l'ensemble étant en cours de montage; et

- la figure 3 est analogue aux figures 1 et 2, la roue étant montée.

La roue selon l'invention est constituée par une jante 1, une entretoise 2 clipsée dans la jante 1 et un axe métallique 3 serti à force dans la jante 1.

La jante 1 est moulée en un matériau ayant de bonnes propriétés mécaniques à froid par exemple un polyoléfine copolymère. La jante 1est surmoulée par un bandage souple 4 en un matériau de la même famille thermoplastique que celui de la jante de sorte que, étant parfaitement compatible avec ce copolymère, on assure une parfaite adhérence entre les deux matériaux, sans risque de séparation entre la jante 1 et son bandage 4. La souplesse du bandage 2 supprime les bruits de roulement.

Pour éviter une mauvaise tenue au fluage et à l'échauffement, l'entretoise 2 est clipsée dans un alésage central $h$ de la jante 1, elle-même moulée dans un matériau ayant une bonne tenue mécanique, une bonne tenue à l'usure et une bonne résistance à l'échauffement par friction, ainsi qu'une aptitude à accepter de fortes déformations pour le montage à force sur la jante 1 et la réception de l'axe 3.

Cet axe 3 peut être dans un métal traité anti-corrosion et est monté sur une platine 5 traitée de la même façon et munie de trous de fixation à un bagage.

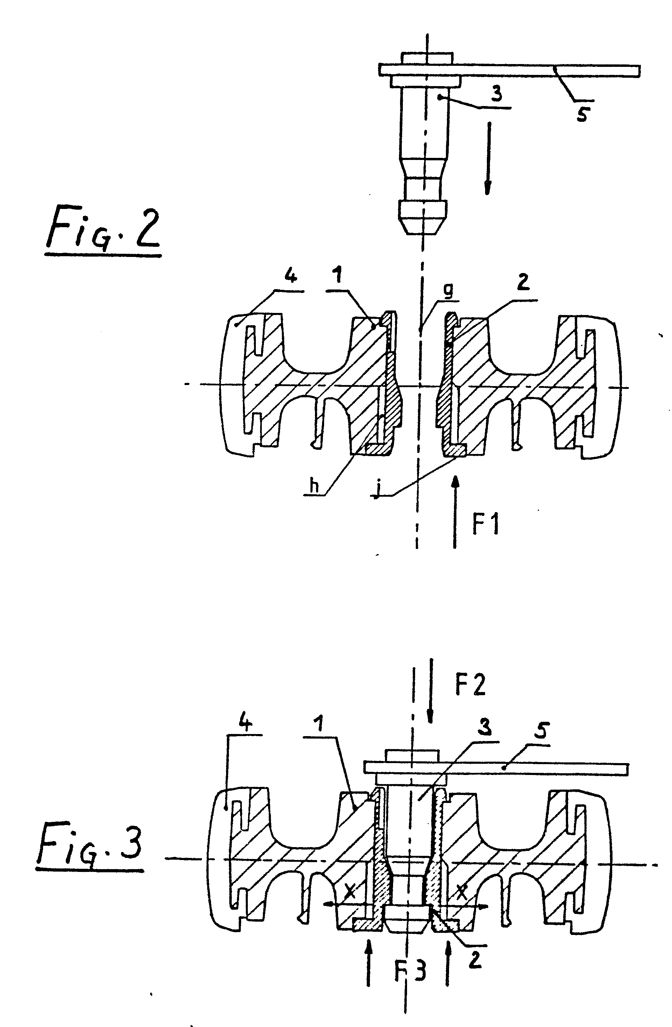

La figure 2 représente le montage de l'entretoise clipsable 2 dans l'alésage $h$ de la jante 1.

Par application d'une force F1 sur la face $j$ de l'entretoise 2, dans l'axe de l'alésage $h$ de la jante 1, on déforme par compression de la matière l'extrémité $f$ de l'entretoise vers l'intérieur au passage du cône $f'$ de l'alésage $h$. Après introduction à fond de l'entretoise 2 jusqu'à l'épaulement $d$, l'extrémité $f$ reprend sa forme primitive car l'élasticité du matériau le permet.

L'épaulement $a$ de l'entretoise 2 vient s'appliquer sur l'évidement $a'$ de la jante 1 ainsi que l'épaulement $d$ de l'entretoise sur l'évidement $d'$ de la jante 1, créant ainsi une impossibilité de démontage.

De plus, des évidements borgnes $b$, régulièrement répartis angulairement à l'intérieur de l'alésage de l'extrémité 2, accroissent la souplesse et l'élasticité au montage de celle-ci dans l'alésage $h$ de la jante 1.

La figure 3 illustre le montage de l'axe métallique 3 dans l'entretoise 2.

Par application d'une force F2 sur l'axe métallique 2, compensée par une force d'appui égale et opposée F3 appliquée sur la face $j$ de l'entretoise 2, on introduit l'axe métallique 1 dans l'alésage $g$ de l'entretoise 2.

Le cône $e'$ de l'axe métallique 3 vient s'appliquer en force sur le cône $e$ de l'entretoise 2. La force F2 est telle que la partie située derrière le cône se déforme dans le sens de la flèche X, dans l'évidement $h$ prévu à cet effet entre le diamètre intérieur de l'alésage de la jante 1 et le diamètre extérieur de l'entretoise 2.

Lorsque l'épaulement $k'$ de l'axe 3 vient en butée mécanique sur l'extrémité $k$ de l'entretoise 2, l'épaulement $c'$ de l'axe métallique 3 vient se mettre en appui sur l'évidement $c$ de l'entretoise 2 revenu à sa place primitive après déformation élastique, créant ainsi une impossibilité de démontage.

De plus, l'axe métallique 3, de par sa position, vient verrouiller l'entretoise 2 dans la zone $f$ et surtout le diamètre intérieur.

**Revendications**

1.- Roue, en particulier pour bagages tel que valise ou sac de voyage, caractérisée par le fait qu'elle comprend une jante (1) moulée, sur un alésage (h) de laquelle est clipsée une entretoise (2) moulée dans un matériau élastiquement déformable et un axe métallique (3) serti à force dans un alésage de ladite entretoise (2).

2.- Roue selon la revendication 1, caractérisée par le fait que la jante (1) est en polyoléfine copolymère.

3.- Roue selon l'une des revendications 1 et 2, caractérisée par le fait que la jante (1) et surmoulée par un bandage souple (4) en un matériau de la même famille thermoplastique que celui de la jante (1).

4.- Roue selon l'une des revendications 1 à 3, caractérisée par le fait que ladite entretoise (2) comporte à ses deux extrémités des épaulements extérieurs ( a, d ) coopérant avec des évidements ( a', d' ) de l'alésage ( h ) de la jante (1) .

5.- Roue selon l'une des revendications 1 à 3, caractérisée par le fait que l'alésage ( h ) de la jante (1) comporte un cone ( f' ) avec lequel coopère une extrémité déformable ( f ) de l'entretoise (2) .

6.- Roue selon la revendication 5, caractérisée par le fait que l'extrémité déformable ( f ) de l'entretoise (2) comporte une pluralité d'évidements borgnes ( b ) régulièrement répartis angulairement à l'intérieur de l'alésage axial de ladite entretoise (2) .

7.- Roue selon l'une des revendications 1 à 6, caractérisée par le fait que l'alésage axial de l'entretoise (2) comporte un cone ( e ) avec lequel coopère une extrémité tronconique ( e' ) de l'axe (3), en regard d'un élargissement de l'alésage ( h ) de la jante ( 1 ) .

8.- Roue selon l'une des revendications 1 à 7, caractérisée par le fait que l'alésage de l'entretoise (2) comporte un évidement (c) avec lequel coopère un épaulement ( c' ) de l'axe (3) .

9.- Roue selon l'une des revendications 1 à 8, caractérisée par le fait que l'axe (3) est serti sur une platine (5) munie de trous de fixation, l'ensemble ayant subi un traitement anti-corrosion.

# Fig. 1

_Fig. 2_

4  1  g  2

h  j

F1

F2

4  1  3  5

_Fig. 3_

x  x

2

F3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | DE-U-8509303 (ELASTOGRAN) <br> * page 2, ligne 26 - page 2, ligne 39; figure 1 * <br> ---- | 1 | A45C5/14 <br> B60B37/10 |
| A | FR-A-2233188 (ALOIS KOBER) <br> * page 2, ligne 40 - page 4, ligne 12; figures 1-3 * <br> ---- | 1 | |
| A | FR-A-1374193 (BOSCH) <br> * le document en entier * <br> ---- | 1 | |
| A | US-A-4067083 (GREENE) <br> ---- | | |
| A | FR-A-2521840 (DELSEY) <br> ---- | | |
| A | GB-A-1080302 (CARR FASTENER) <br> ---- | | |
| A | DE-A-2620076 (BADULLI) <br> ---- | | |
| A | FR-A-2177283 (ZANUSSI) <br> ------ | | |

**DOMAINES TECHNIQUES RECHERCHES (Int. Cl.4 )**

A45C
B60B

Le présent rapport a été établi pour toutes les revendications

| Lieu de la recherche | Date d'achèvement de la recherche | Examinateur |
|---|---|---|
| LA HAYE | 12 JUILLET 1989 | SIGWALT C. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)